# EUROPEAN PATENT APPLICATION

(11) **EP 1 150 230 A2**
(43) Date of publication of application: **31.10.2001**
(21) Application number: 01109497.6
(22) Date of filing: 25.04.2001
(51) Int. Cl.: G06F 17/60

(54) **Electronic catalog recording medium and electronic catalog device**

(30) Priority: 26.04.2000 JP 2000125387; 29.08.2000 JP 2000259249
(71) Applicant: Elephant Chain Block Company Limited, Osaka Sayama-shi, Osaka (JP)
(72) Inventor: Tanaka, Hiroshi, Osaka Sayama-Shi, Osaka (JP); Okamoto, Chieko, Osaka Sayama-Shi, Osaka (JP); Tsuda, Shusaku, Osaka Sayama-Shi, Osaka (JP)
(74) Representative: Schwabe - Sandmair - Marx

(57) **Abstract**

To provide an electronic catalog recording medium for enabling a user to select the desired chain block or crane by himself/herself with ease and efficiency and an electronic catalog device for use in executing the electronic catalog, a drive system selecting program for selecting a drive system of the chain block, a model selecting program for selecting a model of the chain block from the drive system selected by the drive system selecting program, and a model number selecting program for selecting a model number of the chain block in respect of the model selected by the model selecting program are recorded in the electronic catalog recording medium. Further, a moving system selecting program for selecting a moving system of the crane and a model number selecting program for selecting a model number of the crane from the moving system selected by the moving system selecting program are recorded in the electronic catalog recording medium.

## Description

### BACKGROUND OF THE INVENTION

### Field of the Invention

The present invention relates to an electronic catalog medium and to an electronic catalog device. More particularly, the present invention relates to an electronic catalog comprising a recording medium, such as CD-ROM, recording the program for determining the specification of a chain block, a crane and a crane system requested by a user and to an electronic catalog device for use in executing an electronic catalog.

### Description of Background Art

Chain blocks and cranes are widely used as the device to hoist and move loads or heavy objects in a variety of industrial filed. When a user purchases a chain block and a crane, he/she usually tells a sales personnel of a maker or its distributor in detail about the intended use conditions on the user's side and the sales personnel selects an optimum model of chain block and crane that can meet the conditions for the user.

The use conditions are often subject to change on the user's side, and whenever the change happens, the optimum model of chain block or crane is re-selected. If the sales personnel re-selects the optimum model each time the change happens on the user's side, then it's too much of a bother for the sales personnel. On the other hand, it is so difficult for the user to comprehend the detail specifications of the models and select the optimum model by himself/herself.

It is the object of the present invention to provide an electronic catalog recording medium for enabling a user to select the desired chain block or crane by himself/herself with ease and efficiency and an electronic catalog device for use in executing the electronic catalog.

### SUMMARY OF THE INVENTION

The present invention provides a recording medium for an electronic catalog of chain blocks which can select a specific chain block a user requests and in which a model selecting means for selecting a model of the chain block; and a model number selecting means for selecting a model number of the chain block in respect of the model selected by the model selecting means are recorded.

This electronic catalog recording medium can permit the user to select the desired chain block in an orderly sequence by selecting the model of the chain block, first, and then selecting the model number in respect of the selected model by use of the model number selecting means. Thus, the chain block the user wants can be selected with ease and efficiency on the user's side. Hence, whenever the change happens, an optimum chain block for the intended use conditions can be re-selected on the user's side.

The present invention provides a recording medium for an electronic catalog of chain blocks which can select a specific chain block a user requests and in which a power system selecting means for selecting a power system of the chain block; a model selecting means for selecting a model of the chain block from the power system selected by the power system selecting means; and a model number selecting means for selecting a model number of the chain block in respect of the model selected by the model selecting means are recorded.

This electronic catalog recording medium can permit the user to select the desired chain block in an orderly sequence by selecting the power system of the chain block by use of the power system selecting means, first; then selecting the model of the chain block from the power system selected by the power system selecting means, and then selecting the model number in respect of the selected model by use of the model number selecting means. Thus, the chain block the user wants can be selected with ease and efficiency on the user's side. Hence, whenever the change happens, an optimum chain block for the intended use conditions can be re-selected on the user's side.

It is preferable that a standard specification display means for displaying a standard specification of the chain block of the model number selected by the model number selecting means; a specification changing means for changing the standard specification; and a changed specification display means for displaying the changed standard specification are recorded.

These means provide the result that after the model number is selected by the model number selecting means, the standard specification of the chain block of the model number is displayed. If the user wants to change the standard specification to a specification requested by himself/herself, then he/she can use the specification changing means to change the standard specification to the requested specification, and the changed specification can be displayed by the changed specification displaying means. Thus, with this electronic catalog recording medium, once the specification of the chain block up to the model number is selected, the standard specification of that model number will soon be displayed. Hence, after this selection, all the user has to do is to change only the selected items of the standard specification he/she wants to change, and as such can allow the user to select the optimum specification requested by himself/herself with efficiency. Thus, the user can select the optimum chain block quickly and efficiently, as comparing with, for example, the case that even after the selection of the model number, the detail specifications need be re-selected in order until the desired chain block is selected.

The present invention provides a recording medium for an electronic catalog of chain blocks which can select a specific chain block a user requests and in which a model number selecting means for selecting a model number of the chain block; a standard specification display means for displaying a standard specification of the chain block of the model number selected by the model number selecting means; a specification changing means for changing the standard specification; and a changed specification display means for displaying the changed standard specification are recorded.

This electronic catalog provides the result that after the model number is selected by the model number selecting means, the standard specification of the chain block of the model number is displayed. If the user wants to change the standard specification to a specification requested by himself/herself, then he/she can use the specification changing means to change the standard specification to the requested specification, and the changed specification can be displayed by the changed specification displaying means. Thus, with this electronic catalog recording medium, once the selection of the specification up to the model number is made, the standard specification of that model number will soon be displayed. Hence, after this selection, all the user has to do is to change only the selected items of the standard specification he/she wants to change, and as such can allow the user to select the optimum specification requested by himself/herself with efficiency. Thus, the user can select the optimum chain block quickly and efficiently, as comparing with, for example, the case that even after the selection of the model number, the detail specifications need be re-selected in order until the desired chain block is selected.

Preferably, the model number selecting means comprises a model number inputting means for directly inputting the model number and a model number determining means for inputting use conditions of the chain block to determine the model number.

The model number selecting means comprising the model number inputting means and the model number determining means can provide the result that for example when the user has knowledge of the model number, he/she can select the model number immediately by inputting the model number, while on the other hand, even when the user has no knowledge of the model number, he/she can do it by inputting the use conditions by use of the model number determining means. Thus, the model number of the desired model can be selected with efficiently in accordance with the level of knowledge of the user.

Preferably, the electronic catalog recording medium of the present invention comprises a diagram display means for displaying the chain block of the model number selected by the model number selecting means in a diagram.

The provision of the diagram display means can provide the advantage that since the standard specification of the chain block and the changed specification of the same are displayed in the diagram, the user can visually check the chain block related to that specification.

The present invention provides a recording medium for an electronic catalog of cranes which can select a specific crane a user requests and in which a moving system selecting means for selecting a moving system of the crane and a model number selecting means for selecting a model number of the crane from the moving system selected by the moving system selecting means are recorded.

This electronic catalog recording medium can permit the user to select the desired crane in an orderly sequence by selecting the moving system of the crane by use of the moving system selecting means, first, and then selecting the model number by use of the model number selecting means. Thus, the crane the user requests can be selected with ease and efficiency on the user's side. Hence, whenever the change happens, an optimum chain block for the intended use conditions can be re-selected on the user's side.

The present invention provides a recording medium for an electronic catalog of chain blocks which can select a specific chain block a user requests and in which an operating condition inputting means for inputting operating conditions of the chain block and a chain block specifying means for specifying the chain block are recorded, wherein the operating condition inputting means comprises a rated load inputting means for inputting a rated load; a lower hook moving distance inputting means for inputting a moving distance of a lower hook of the chain block; a hand-operated power /motor-driven power inputting means for inputting an information on which is selected as power of the chain block, hand-operated power or motor-driven power; a transverse movement inputting means for inputting information on need of transverse movement of the chain block; and a storing means for storing values input by the lower hook moving distance inputting means, the hand-operated power/motor-driven power inputting means and the transverse movement inputting means, wherein the chain block specifying means comprises a power system selecting means for selecting a power system of the chain block; and a model number selecting means for selecting a model number of the chain block by inputting a rated load and a connection system, and wherein the selection of the power system and the selection of the model number, which are made by the power system selecting means and the model number selecting means, respectively, of the chain block specifying means, are made on the basis of the input values stored in the storing means of the operating condition inputting means.

With this electronic catalog recording medium, the input values of (i) the rated load and the moving distance of the lower hook of the chain block, which are input by use of the rated load inputting means and the lower hook moving distance inputting means, respectively, of the operating condition inputting means, (ii) the power (hand-operated power or motor-driven power) of the chain block, which is input by use of the hand-operated power/motor-driven power inputting means and (iii) the need of transverse movement of the chain block, which is input by use of the transverse movement inputting means are stored in the storing means. In the case where the chain block is specified by use of the chain block specifying means, when the power system is selected by use of the power system selecting means, the power (hand-operated power or motor-driven power) of the chain block is automatically selected by the input values in the storing means. Then, when the model number is selected by the model number selecting means, the rated load and the connection system are automatically selected by the input values in the storing means. This can permit the user to select the requested chain block of the model number in the form of being further related to the intended use conditions in a simple and efficient manner.

The present invention provides a recording medium for an electronic catalog of crane systems which can select a crane system having a specific chain block a user requests and in which an operating condition inputting means for inputting operating conditions of the crane system; a chain block specifying means for specifying the chain block; and a crane specifying means for specifying the crane are recorded, wherein the operating condition inputting means comprises a rated load inputting means for inputting a rated load; a lower hook moving distance inputting means for inputting a moving distance of a lower hook of the chain block; a hand-operated power /motor-driven power inputting means for inputting an information on which is selected as power of the chain block, hand-operated power or motor-driven power; a transverse movement inputting means for inputting information on need of transverse movement of the chain block; a moving direction inputting means for inputting information on need for the crane to be moved in a traveling direction or a swiveling direction; and a storing means for storing values input by the lower hook moving distance inputting means, the hand-operated power/motor-driven power inputting means; the transverse movement inputting means and the moving direction inputting means, wherein the chain block specifying means comprises a power system selecting means for selecting a power system of the chain block; and a model number selecting means for selecting a model number of the chain block by inputting a rated load and a connection system, and wherein the crane specifying means comprises a moving system selecting means for selecting a moving system of the crane; and a model number selecting means for selecting a model number of the crane from the moving system selected by the moving system selecting means, and wherein the selection of the power system and the selection of the model number, which are made by the power system selecting means and the model number selecting means, respectively, of the chain block specifying means, and the selection of the moving system and the selection of the model number, which are made by the moving system selecting means and the model number selecting means, respectively, of the crane specifying means, are made on the basis of the input values stored in the storing means of the operating condition inputting means.

With this electronic catalog recording medium, the input values of (i) the rated load and the moving distance of the lower hook of the chain block, which are input by use of the rated load inputting means and the lower hook moving distance inputting means, respectively, of the operating condition inputting means, (ii) the power (hand-operated power or motor-driven power) of the chain block, which is input by use of the hand-operated power/motor-driven power inputting means, (iii) the need of transverse movement of the chain block, which is input by use of the transverse movement inputting means and (iv) the need for the crane to move in the traveling direction or in the swelling direction, which is input by use of the moving direction inputting means, are stored in the storing means.

In the case where the chain block is specified by use of the chain block specifying means, when the power system is selected by use of the power system selecting means, the power (hand-operated power or motor-driven power) of the chain block is automatically selected by the input values in the storing means. Then, when the model number is selected by the model number selecting means, the rated load and the connection system are automatically selected by the input values in the storing means. This can permit the user to select the requested chain block of the model number in the form of being further related to the intended use conditions in a simple and efficient manner.

Sequentially, in the case where the crane is specified by use of the crane specifying means, when the moving system is selected by use of the moving system selecting means, the moving direction (traveling direction or swiveling direction) of the crane is automatically selected by the input values in the storing means. Then, when the model number is selected by the model number selecting means, the rated load is automatically selected by the input values in the storing means. This can permit the user to select the requested crane of the model number in the form of being further related to the intended use conditions in a simple and efficient manner.

Consequently, the user can select the crane system equipped with the chain block the user wants in the form of being further related to the intended use conditions in a simple and efficient manner.

Further, the present invention provides an electronic catalog device including a recording medium for an electronic catalog of chain blocks which can select a specific chain block a user requests and in which a model selecting means for selecting a model of the chain block; and a model number selecting means for selecting a model number of the chain block in respect of the model selected by the model selecting means are recorded.

The electronic catalog device including this recording medium can permit the user to select the desired chain block, crane and crane system by himself/herself in a simple and efficient manner. Hence, whenever the change happens, an optimum chain block, crane and crane system for the intended use conditions can be re-selected on the user's side.

The present invention provides an electronic catalog program for selecting a specific chain block a user requests, which program comprises a model selecting means for selecting a model of the chain block; and a model number selecting means for selecting a model number of the chain block in respect of the model selected by the model selecting means.

This electronic catalog program can permit the user to select the desired chain block in an orderly sequence by selecting the model of the chain block, first, and then selecting the model number in respect of the selected model by use of the model number selecting means. Thus, the chain block the user wants can be selected with ease and efficiency on the user's side. Hence, whenever the change happens, an optimum chain block for the intended use conditions can be re-selected on the user's side.

The present invention provides an electronic catalog program for selecting a specific crane a user requests, which program comprises a moving system selecting means for selecting a moving system of the crane; and a model number selecting means for selecting a model number of the crane from the moving system selected by the moving system selecting means.

This electronic catalog program can permit the user to select the desired crane in an orderly sequence by selecting the moving system of the crane by use of the moving system selecting means, first, and then selecting the model number by use of the model number selecting means. Thus, the crane the user wants can be selected with ease and efficiency on the user's side. Hence, whenever the change happens, an optimum chain block for the intended use conditions can be re-selected on the user's side.

The present invention provides an electronic catalog program for selecting a crane system including a specific chain block a user requests, which program comprises an operating condition inputting means for inputting operating conditions of the crane system, a chain block specifying means for specifying the chain block, and a crane specifying means for specifying the crane, wherein the operating condition inputting means comprises a rated load inputting means for inputting a rated load; a lower hook moving distance inputting means for inputting a moving distance of a lower hook of the chain block; a hand-operated power /motor-driven power inputting means for inputting an information on which is selected as power of the chain block, hand-operated power or motor-driven power; a transverse movement inputting means for inputting information on need of transverse movement of the chain block; a moving direction inputting means for inputting information on need for the crane to be moved in a traveling direction or a swiveling direction; and a storing means for storing values input by the lower hook moving distance inputting means, the hand-operated power/motor-driven power inputting means, the transverse movement inputting means, and the moving direction inputting means, wherein the chain block specifying means comprises a power system selecting means for selecting a power system of the chain block; and a model number selecting means for selecting a model number of the chain block by inputting a rated load and a connection system, wherein the crane specifying means comprises a moving system selecting means for selecting a moving system of the crane and a model number selecting means for selecting a model number of the crane from the moving system selected by the moving system selecting means, and wherein the selection of the power system and the selection of the model number, which are made by the power system selecting means and the model number selecting means, respectively, of the chain block specifying means, and the selection of the moving system and the selection of the model number, which are made by the moving system selecting means and the model number selecting means, respectively, of the crane specifying means, are made on the basis of the input values stored in the storing means of the operating condition inputting means.

With this electronic catalog program, the input values of (i) the rated load and the moving distance of the lower hook of the chain block, which are input by use of the rated load inputting means and the lower hook moving distance inputting means, respectively, of the operating condition inputting means; (ii) the power (hand-operated power or motor-driven power) of the chain block, which is input by use of the hand-operated power/motor-driven power inputting means, (iii) the need of transverse movement of the chain block, which is input by use of the transverse movement inputting means and (iv) the need for the crane to move in the traveling direction or in the swelling direction, which is input by use of the moving direction inputting means, are stored in the storing means.

In the case where the chain block is specified by use of the chain block specifying means, when the power system is selected by use of the power system selecting means, the power (hand-operated power or motor-driven power) of the chain block is automatically selected by the input values in the storing means. Then, when the model number is selected by the model number selecting means, the rated load and the connection system are automatically selected by the input values in the storing means. This can permit the user to select the requested chain block of the model number in the form of being further related to the intended use conditions in a simple and efficient manner.

Sequentially, in the case where the crane is specified by use of the crane specifying means, when the moving system is selected by use of the moving system selecting means, the moving direction (traveling direction or swiveling direction) of the crane is automatically selected by the input values in the storing means. Then, when the model number is selected by the model number selecting means, the rated load is automatically selected by the input values in the storing means. This can permit the user to select the requested crane of the model number in the form of being further related to the intended use conditions in a simple and efficient manner.

Consequently, the user can select the crane system equipped with the chain block the user wants in the form of being further related to the intended use conditions in a simple and efficient manner.

### BRIEF DESCRIPTION OF THE DRAWINGS

In the drawings:
FIG. 1 is a block diagram showing an embodiment of a computer system as an electronic catalog device of the present invention;
FIG. 2 is a flow diagram showing a process of a chain block specifying program;
FIG. 3 is a diagram showing a dialog box to select a drive system;
FIG. 4 is a diagram showing a dialog box to select a model;
FIG. 5 is a diagram showing a dialog box for use conditions;
FIG. 6 is a diagram showing a dialog box to select a search method;
FIG. 7 is a diagram showing a dialog box for display;
FIG. 8 is a diagram showing a dialog box for a specification of a chain block;
FIG. 9 is a flow diagram showing a process of a crane specifying program;
FIG. 10 is a flow diagram showing a process of an overhead traveling crane specifying program;
FIG. 11 is a flow diagram showing a process of a jib crane specifying program;
FIG. 12 is a diagram showing a dialog box to select a moving system;
FIG. 13 is a diagram showing a dialog box to select a traveling system;
FIG. 14 is a diagram showing a dialog box to select a saddle;
FIG. 15 is a diagram showing a dialog box to select a girder;
FIG. 16 is a diagram showing a dialog box to select a specification of an overhead traveling crane;
FIG. 17 is a diagram showing a dialog box to select a rotary system;
FIG. 18 is a diagram showing a dialog box for a specification of a jib crane;
FIG. 19 is a flow diagram showing a process of a crane building program;
FIG. 20 is a diagram showing a dialog box to input a rated load;
FIG. 21 is a diagram showing a dialog box to input a moving distance of a lower hook;
FIG. 22 is a diagram showing a dialog box to input a traverse movement; and
FIG. 23 is a diagram showing a dialog box to input a moving direction.

### DETAILED DESCRIPTION OF PREFERRED EMBODIMENTS

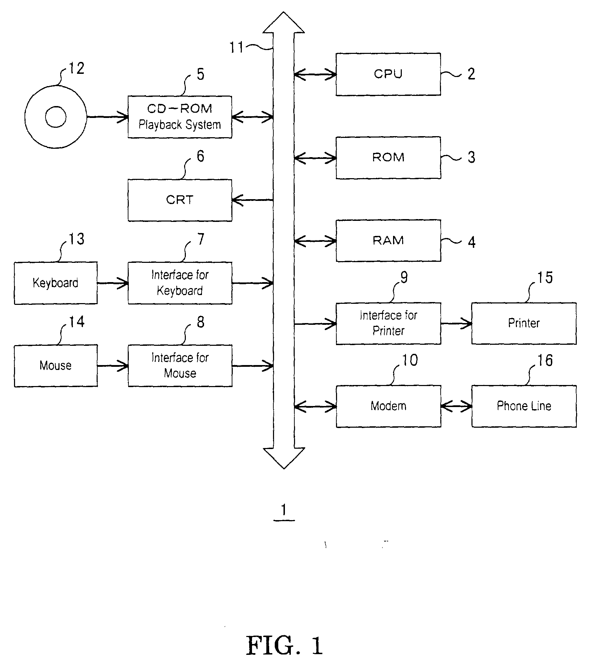

Referring to FIG. 1, which is a block diagram showing an embodiment of a computer system forming an electronic catalog device of the present invention, the computer system 1 includes a CPU 2 for executing a control of the device, a ROM 3 in which a control program is stored, a RAM 4 forming a storing medium (memory) in which a work memory is stored, a CD-ROM playback system 5 in which a CD-ROM 12 forming an electronic catalog recording medium is loaded for playback, a CRT 6 forming a display means, an interface 7 for keyboard use to which a keyboard 13 is connected as an input means, an interface 8 for mouse use to which a mouse 14 is connected, an interface 9 for printer use to which a printer 15 is connected and a modem 10 to which a phone line 16 is connected. These parts are connected to the CPU 2 through a bus 11.

Electronic catalogs of chain blocks, cranes and crane systems are recorded in the CD-ROM 12. When the CD-ROM 12 is loaded on the CD-ROM playback system 5, the CPU 2 reads various programs recorded in the CD-ROM 12, including a chain block specifying program forming a chain block specifying means, a crane specifying program forming a crane specifying means and an operating condition inputting program forming an operating condition inputting means for inputting the operating conditions of chain blocks, cranes and crane systems, and writes the various programs onto the RAM 4, so as to execute the following processes.

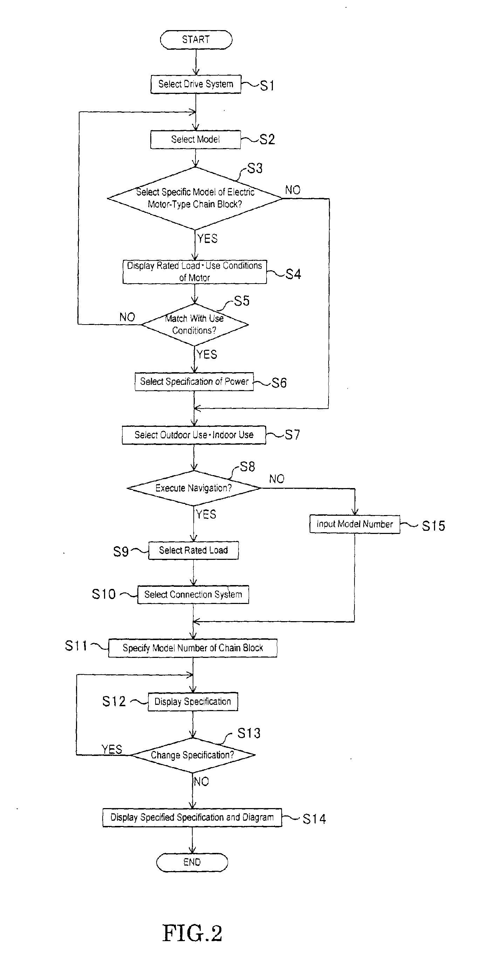

Referring now to FIG. 2, which is a flow diagram showing a process of a chain block specifying program, description will be given first on the process made by the chain block specifying program of the electronic catalog.

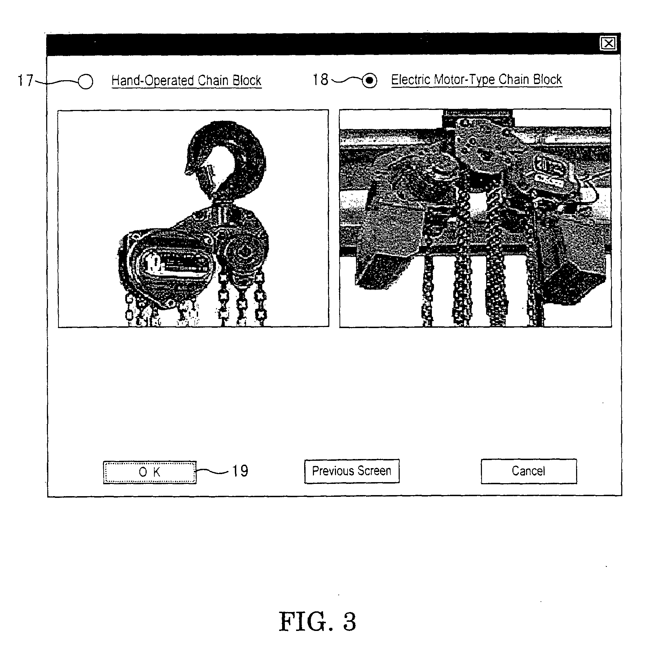

This process may be activated or booted automatically when the CD-ROM 12 is loaded or may be selected from a menu screen displayed at the same time as the other programs. When this process is initiated, the drive system selecting program forming the drive system selecting means operates first to display a dialog box to select a drive system, as shown in FIG. 3, to prompt a user to select either a hand-operated type chain block or a motor-driven type chain block.

When selecting the hand-operated,type chain block in the dialog box to select a drive system, the user clicks a selection button 17, while on the other hand, when selecting the motor-driven type chain block, he/she clicks a selection button 18 in the step S1. When the user clicks an OK button 19, a model selecting program forming a model selecting means operates to display a dialog box to select the model, so as to prompt the user to select the model related to the specified drive system.

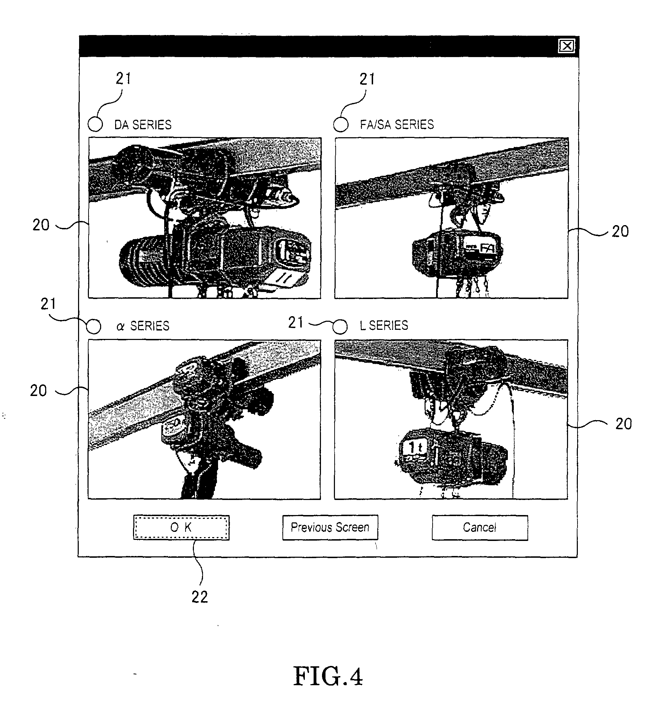

For example, when the user clicks the selection button 18 in the dialog box to select the drive system first and then clicks the OK button 19, a dialog box to select the model of motor-driven type chain block is displayed, as shown in FIG. 4. In the dialog box to select the model, photos 20 of the models of motor-driven type chain blocks are displayed. When the user places a pointer on the photos 20, the characteristic features of the related model are displayed on the screen. Selection buttons 21 are arranged in association with the photos 20 so that the user may click the selection button 21 of the desired model by himself/herself in the step S2.

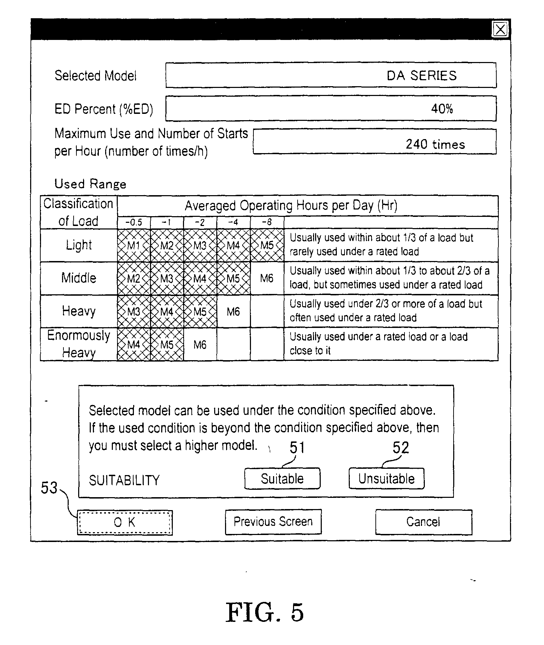

When the user selects a specific model of the motor-driven type chain block and then clicks the OK button 22 (S3: YES), the dialog box for use conditions including the rated load and use conditions of the motor of the selected specific model is displayed in the step S4, including an ED percent (%ED), a maximum use and number of starts per hour (number of times/h), and a used range of the selected specific model, as shown in FIG. 5, so that the user can make judgment on whether the use conditions displayed match with the use conditions on the user's side. It is to be noted that the grade marks M1 to M6 shown in FIG. 5 are compliant with ISO-4601-1.

When the use conditions in the dialog box for use conditions match with the intended use conditions on the user's side, the user clicks a SUITABLE button 51, while on the other hand, when they do not, he/she clicks an UNSUITABLE button 52.

When the user clicks the SUITABLE button 51 first and then clicks an OK button 53 (S5: YES), a dialog box to select specification of power (not shown) is displayed. The user selects or inputs the number of phases (a single phase or three phases), frequency (50kHz or 60kHz), length of a power code and others in the step S6. Then, a dialog box to select outdoor use /indoor use (not shown) is displayed, to prompt the user to select either the one for outdoor use or the one for indoor use in this dialog box in the step S7. The chain block for outdoor use is provided with a cover to protect the chain block from rainwater.

When the user clicks the UNSUITABLE button 52 first and then clicks the OK button 53 (S5: NO), the dialog box to select the model is displayed again. Then, the user re-selects a higher model in the step S2.

When the user already selects a specific hand-operated chain block model (S3: NO), the process jumps to a dialog box to select outdoor use/indoor use (not shown), to prompt the user to select either the outdoor use or the indoor use in this dialog box in the step S7.

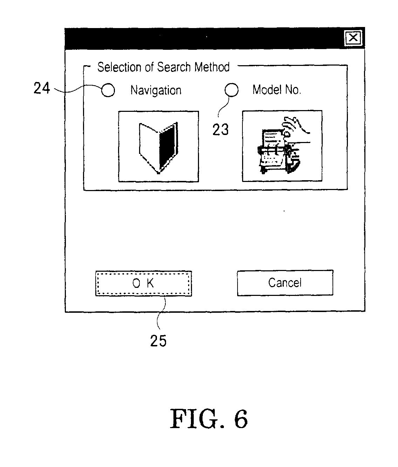

When the user selects either the one for outdoor use or the one for indoor use in the dialog box to select outdoor use/indoor use in the step S7, a model number selecting program forming a model number selecting means operates to display a dialog box to select either a search method of selecting or inputting the model number of the desired model directly or a search method of executing a navigation by inputting use conditions of the chain block to determine the model number, as shown in FIG. 6.

When the user has knowledge of the model number of the desired model, he/she clicks a selection button 23 in the dialog box to select the search method. On the other hand, when he/she has no knowledge of the model number of the desired model, he/she clicks a selection button 24 of Navigation first and then clicks an OK button 25. Thus, when the user already grasps the model number of the desired model, he/she clicks the selection button 23 of the model first and then clicks the OK button 25 (S8: NO). Then, the model number inputting program forming the model number inputting means operates to display a dialog box to input the model number (not shown), to prompt the user to input the model number of the desired model in the step S15, so as to immediately find the desired model. Even when the user does not grasp the model number precisely, if he/she inputs, for example, first occurrence of numbers of the model number and then a mark "*", then the model numbers including "*" and later numbers can also be searched by a fuzzy search. For example, when the user inputs the model number like "DAG*", the search results of the model numbers of "DAG-0.5, DAG-1S, etc." can be obtained.

On the other hand, when the user has no knowledge of the model number of the desired model, he/she can click the selection button 24 first i and then the OK button 25 (S8: YES). Then, a model number finding program forming a model number finding means operates to execute the navigation. When the user inputs the intended use conditions of the chain block, he/she can find the model number of the desired model. Thus, the model number of the desired model can be selected with efficiency in accordance with the level of knowledge of the user.

When the user clicks the selection button 24 of Navigation first and then clicks the OK button 25, a dialog box to select rated load (not shown) is displayed, first, to prompt the user to select the rated load. When the user selects the desired rated load in this dialog box in the step S9, a dialog box for a display screen including a connection system selecting display screen 29 for selecting a connection system and a standard specification display screen 30 for displaying a standard specification is displayed.

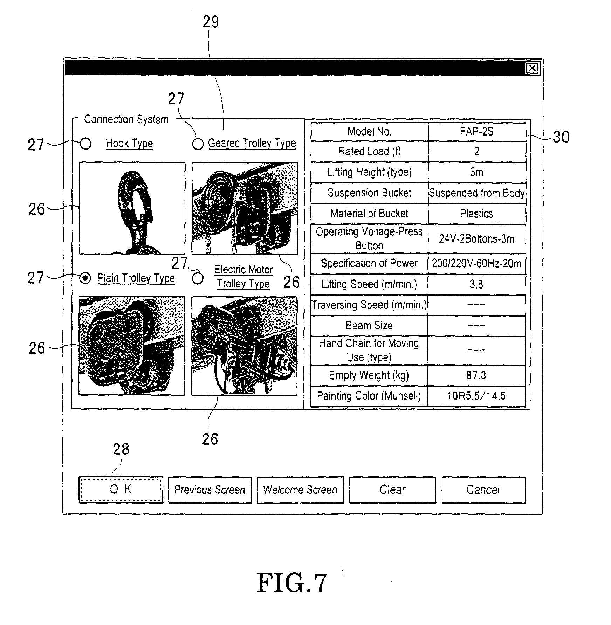

The dialog box to display the motor-driven type chain block is shown, for example, in FIG. 7. In the connection system selecting display screen 29 of this dialog box, photos 26 of a hook type, a geared trolley type, a plain trolley type and a motor-driven trolley type are displayed. When the user places the pointer on the photos 26, the characteristic features of the related type of chain block are displayed on the screen. It is to be noted that when the hand-operated chain block is already selected, the motor-driven trolley type chain block is not displayed. Selection buttons 27 are arranged in association with the photos 26. When the user clicks the selection button 27 of the desired connection system first and then clicks the OK button 28 in the step S10, the model number of the chain block the user wants is specified in the step S11. Then, a program to display the standard specification, which forms a means to display the standard specification, operates to display the standard specification of the specified chain block on the standard specification display screen 30 in the step S12.

When the motor-driven type chain block is selected, various dialog boxes (not shown) to select the options, such as lifting speed (normal speed or 2-speed), push-button cable length, total number of push buttons, and traversing speed (normal speed, low-speed and 2-speed: only when the motor-driven trolley type is selected), are displayed before the standard specification is displayed in the standard specification display screen 30. Then, the user can select or input the options as desired.

If the user wants to change the standard specification displayed in the standard specification display screen 30 to the specification he/she wants (S13: YES), then he/she can activate a specification changing program forming a specification changing means, to selectively change the standard specification to any desired specification. Specifically, if the user wants to change some items, such as load-lifting height, type of bucket and type of hand chain for moving use, of the specification displayed in the standard specification display screen 30, then he/she can place the pointer on the target column to select and input the detail specifications as desired.

Once the detail specifications of the chain block up to the model number are selected by use of this navigation, the standard specification of that model number will soon be displayed. After this selection, all the user has to do is to change only the selected items of the standard specification he/she wants to change, and as such can allow the user to select the optimum specification requested by himself/herself with efficiency. Thus, the user can select the optimum chain block quickly and efficiently, as comparing with, for example, the case that even after the selection of the model number, the detail specifications need be re-selected in order until the desired chain block is selected.

When the model number is input in the dialog box to input the model number in the step S15, the model number of the chain block is specified in the step S11 and the specification of the chain block of the specified model number is displayed in the standard specification display screen 30 in the step S12, so that the user can change the standard specifications as desired in that screen.

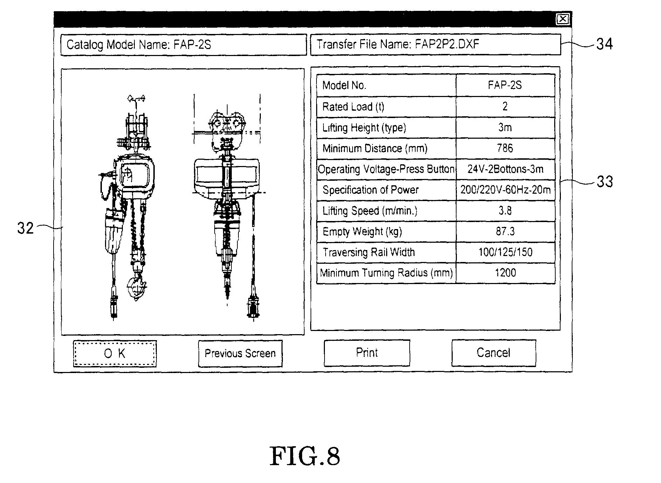

When the user changes the detail specifications as needed (S13: NO) and then clicks the OK button 28, a diagram display program forming a diagram display means operates to display a dialog box to display a chain block specification in the step S14, in which the diagram and the specification of the chain block having the model number and specification as was specified are shown. For example, as shown in FIG. 8, the diagram of the specified chain block is displayed in the left column 32 of the dialog box and the specification of the specified chain block is displayed in the right column 33 of the same. This can permit the user to visually check the chain block related to the specified specification. In addition, this data is given a transfer file name 34 so that it can be copied as it is; can be read as a CAD data; or can be sent through Internet via the modem 10. Price related to the specification may be displayed in the dialog box for the specification of the chain block, though not shown.

The chain block specifying program of this electronic catalog can permit the user to select the desired chain block in an orderly sequence by selecting the drive system of the chain block by use of the drive system selecting program, first; then selecting the model of the chain block from the selected drive system by use of the model selecting program; and finally selecting the model number of the selected model by use of the model number selecting program. Thus, the chain block the user wants can be selected with ease and efficiency on the user's side.

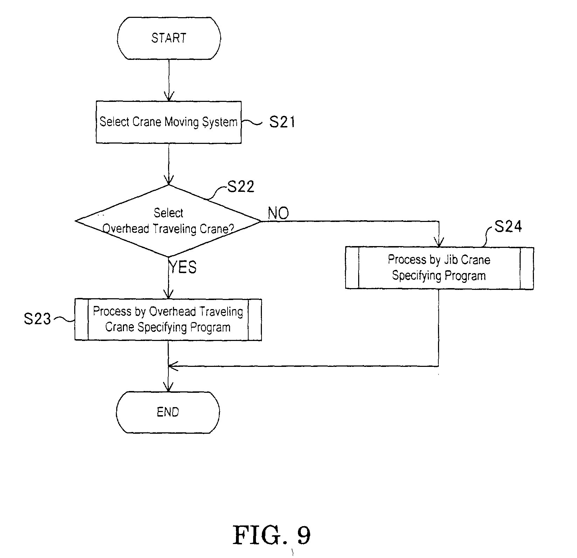

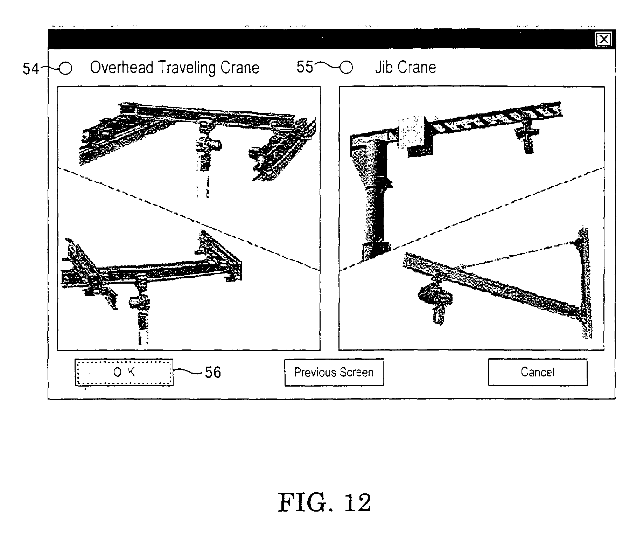

Referring further to FIG. 9, which is a flow diagram showing a process of a crane specifying program, description will be given on the process made by the crane specifying program of the electronic catalog. This process may be activated or booted automatically when the CD-ROM 12 is loaded or may be selected from a menu screen displayed at the same time as the other programs. When this process is initiated, a moving system selecting program forming a moving system selecting means operates to display a dialog box to select the moving system, to prompt the user to select either the overhead traveling crane or the jib crane, as shown in FIG. 12. When selecting the overhead traveling crane in this dialog box, the user clicks a selection button 54, while on the other hand, when selecting the jib crane, he/she clicks a selection button 55 in the step S21. When the user clicks the selection button 54 to select the overhead traveling crane and then an OK button 56 (S22: YES), an overhead traveling crane specifying program forming the model number selecting means operates (S23). On the other hand, when the user clicks the selection button 55 to select the jib crane and then the OK button 56 (S22: NO), a jib crane specifying program forming the model number selecting means operates in the step S24.

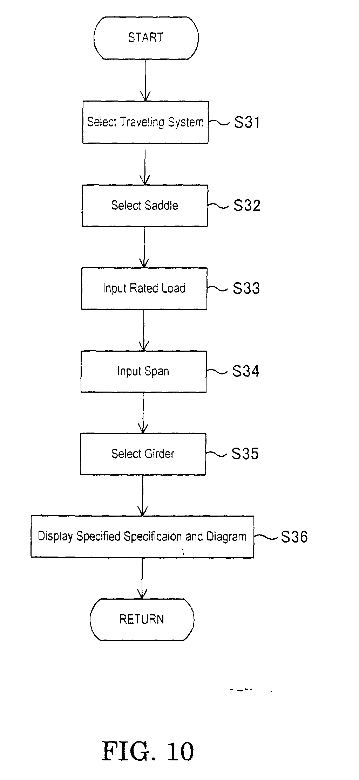

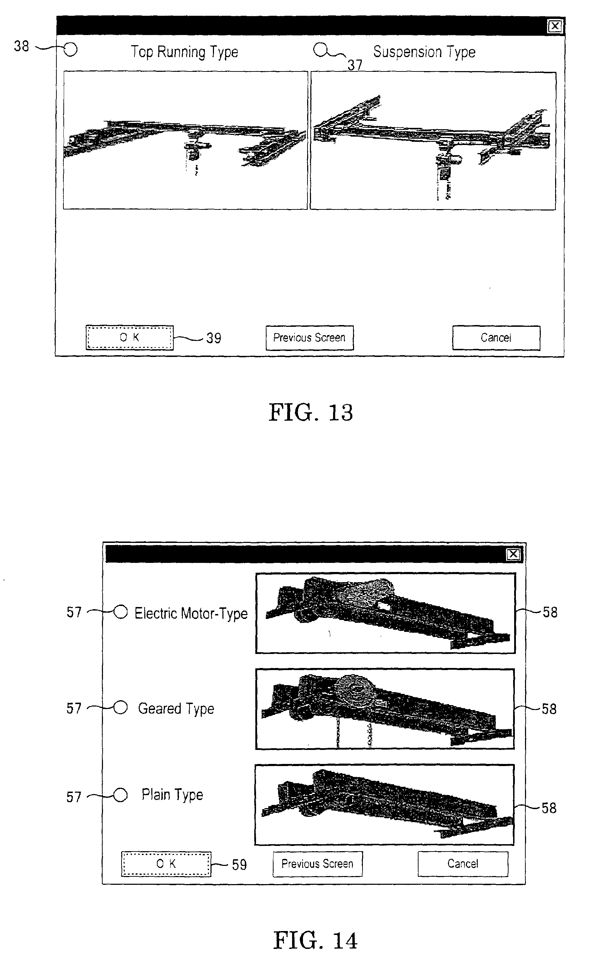

Shown in FIG. 10 is a flow diagram showing the process of the overhead traveling crane specifying program. When this process is initiated, a dialog box to select a traveling system is displayed, to prompt the user to select either a suspension type or a top running type, as shown in FIG. 13. When selecting the suspension type in this dialog box, the user clicks a selection button 37, while on the other hand, when selecting the top running type, he/she clicks a selection button 38 in the step S31. Thereafter, when the user clicks an OK button 39, a dialog box to select a saddle is displayed to prompt the user to select a saddle, as shown in FIG. 14. In this dialog box, photos 58 of the saddles of motor-driven type, geared type and plain type are displayed. When the user places the pointer on the photos 58, the characteristic features of the related saddle are displayed on the screen. Selection buttons 57 are arranged in association with the respective photos 58. The user clicks the selection button 57 of the desired saddle and then clicks the OK button 59 in the step S32. After the selection of the saddle, a dialog box to input beam conditions (not shown) is displayed to prompt the user to input a rated load and a span in this dialog box in the steps S33 and S34.

When the motor-driven type saddle is selected in the dialog box to select the saddle, a dialog box to select specifications of electric power (not shown) is displayed to prompt the user to select the specifications of power. The user selects or inputs in this dialog box the frequency (50kHz or 60kHz) and traveling speed (high speed, low speed and 2-speed) as are desired. When the user clicks the selection button 38 of the top running type, first, and then clicks the OK button 39, a dialog box to select a wheel type (not shown) is displayed before the next dialog box to select a saddle is displayed. In the dialog box to select the wheel, the user selects a preferable wheel from a urethane wheel and a steel wheel.

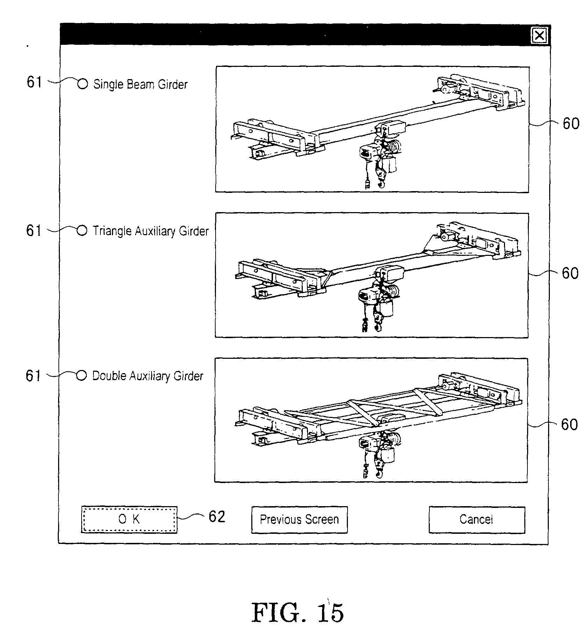

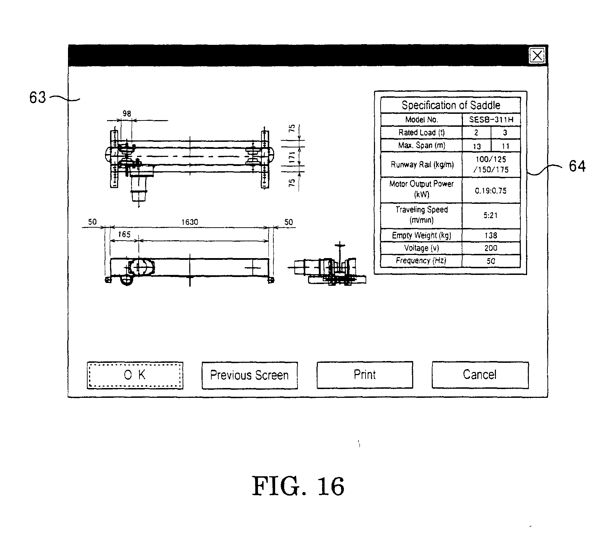

After the rated load and the span are input in the dialog box to input beam conditions (not shown) in the steps S33 and S34, a dialog box to select a girder is displayed to prompt the user to select the girder. For example, when the suspension type is selected, photos 60 of a single beam girder, a triangle auxiliary girder and a double auxiliary girder are displayed, as shown in FIG. 15. On the other hand, when the top running type is selected, the photos of the triangle auxiliary girder, the double auxiliary girder, a combined girder and a box girder are displayed. When the user places the pointer on the photos 60, the characteristic features of the related girder are displayed on the screen. Selection buttons 61 are arranged in association with the photos 60. When the user clicks a selection button 61 of the desired girder first and then clicks an OK button 62 in the step S35, the dialog box for the specification of the overhead traveling crane is displayed in the step S36, in which the diagram 63 and the specification 64 of the overhead traveling crane of the model number and specification as specified are displayed, as shown in FIG. 16 (only the saddle is shown as an example in FIG. 16). This can permit the user to visually check the overhead traveling crane related to the specified specification. In addition, this data can be copied as it is; can be read as the CAD data; or can be sent through Internet via the modem 10, as is the case with the above. Price related to the specification may be displayed in this dialog box for the specification of the overhead traveling crane, though not shown.

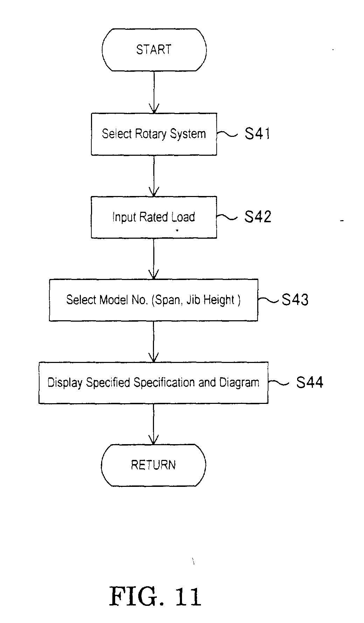

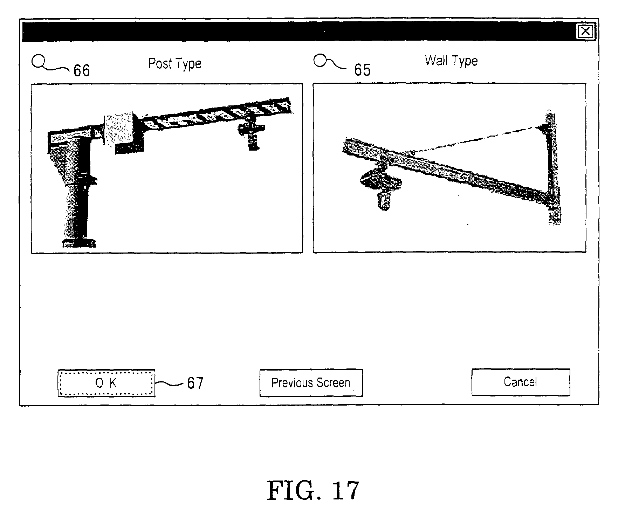

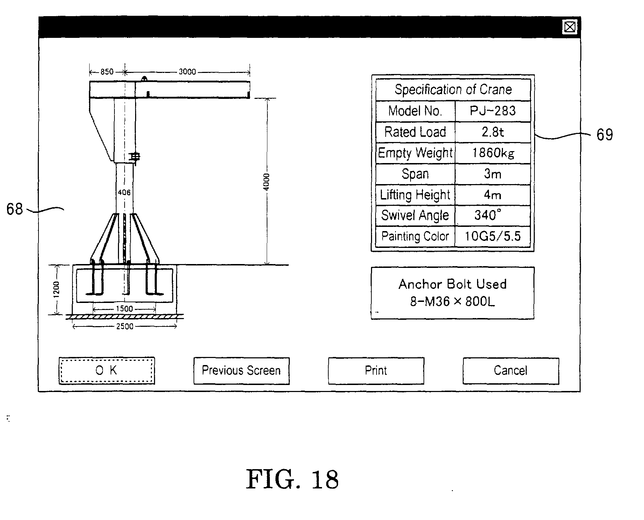

Shown in FIG. 11 is a flow diagram showing the process by the jib crane specifying program. When this process is initiated, a dialog box to select a rotary system is displayed to prompt the user to select either a post type or a wall type, as shown in FIG. 17. When selecting the wall type in this dialog box, the user clicks a selection button 65, while on the other hand, when selecting the post type, he/she clicks a selection button 66 in the step S41. Thereafter, when the user clicks an OK button 67, a dialog box to select a rated load (not shown) is displayed to prompt the user to select the rated load he/she wants in this dialog box in the step S42. After the rated load is selected, the dialog box to select the model number (not shown) is displayed. If the user selects the model number of jib crane having the desired span and jib height in this dialog in the step S43, then a dialog box for specification of the jib crane is displayed in the step S44, in which the diagram 68 and the specification 69 of the jib crane of the specified model number and specification are displayed, as shown in FIG. 18.

When the user selects the model number of the wall type jib crane in the selection of the model number, a normal wall type (WJ type) or a L-shaped type (LWJ type) and a motor-driven type or a hand-operated type are automatically selected. On the other hand, when the user selects the model number of the post type jib crane in the selection of the model number, a plain type (PJ type) or a hand chain rotary type (PJG type) and a motor-driven type or a hand-operated type are automatically selected.

This can permit the user to visually check the jib crane related to the specified specification. In addition, this data can be copied as it is; can be read as the CAD data; or can be sent through Internet via the modem 10, as is the case with the above. Price related to the specification may be displayed in the dialog box for the specification of the jib crane, though not shown.

According to the crane specifying program of this electronic catalog, the user can select the desired crane in an orderly sequence by selecting either the overhead traveling crane or the jib crane by use of the crane moving system selecting program first, and then selecting either the model number of the overhead traveling crane or the model number of the jib crane through the process of either the overhead traveling crane specifying program or the jib crane specifying program. Thus, the crane the user wants can be selected with ease and efficiency on the user's side, and as such can allow the user to re-select an optimum crane each time the change in use conditions happens.

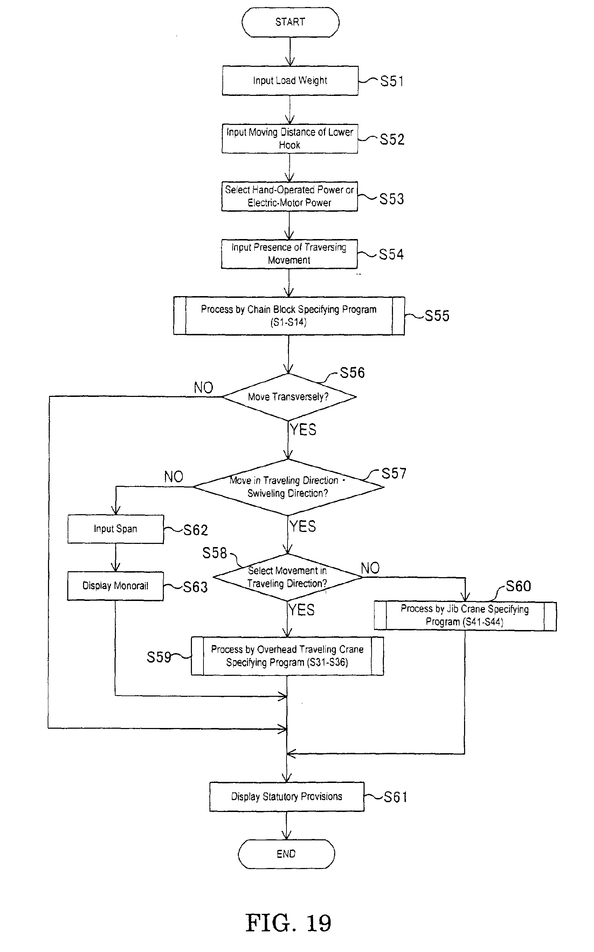

In addition, with this electronic catalog, the chain block specifying program or the crane specifying program and the operating condition inputting program can be linked to each other to construct a crane system equipped with a specific chain block the user wants. Shown in FIG. 19 is a flow diagram showing the process made by such a crane constructing program. Referring to FIG. 19, description will be given on the process made by the crane constructing program. The crane constructing program is used for constructing the crane system the user wants in a way easy for the user to understand, in which the operating condition inputting program is used to select the operating conditions of the chain block in advance, first; then the chain block specifying program is linked to it to select the specific chain block; then the operating condition inputting program is used to select the presence and the operating conditions of the crane; and the crane specifying program is operated, so as to construct the crane system the user wants.

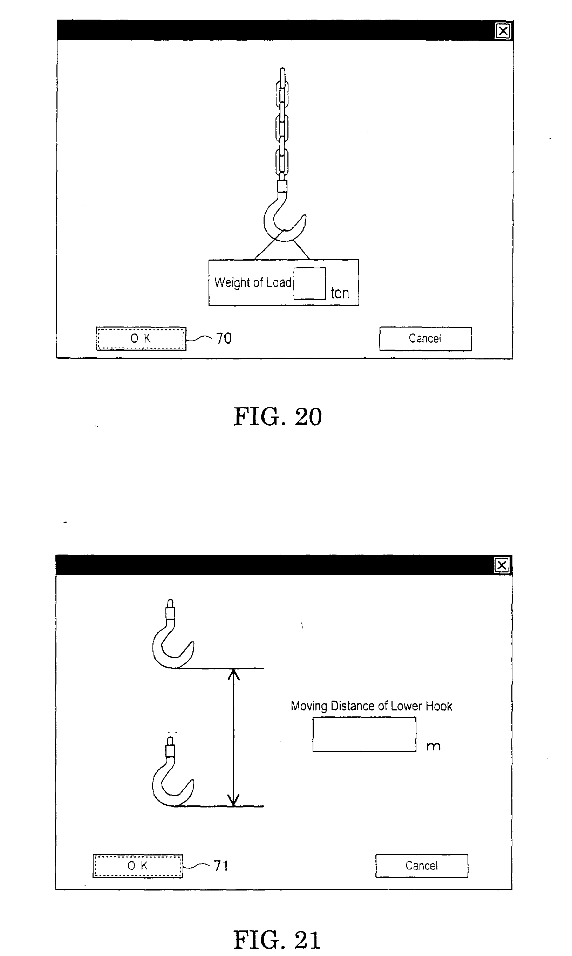

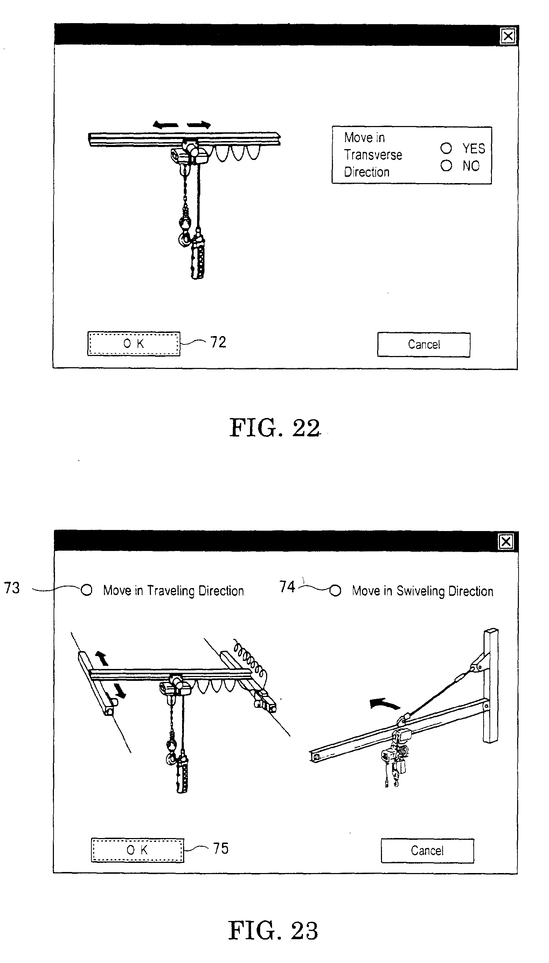

This process may be activated or booted automatically when the CD-ROM 12 is loaded or may be selected from the menu screen displayed at the same time as the other programs. When this process is initiated, the operating condition inputting program operates first and then a rated load inputting program forming a rated load inputting means operates, to display a dialog box to input rated load, so as to prompt the user to input a weight of load (maximum value), as shown in FIG. 20. The user inputs the weight of load (maximum value) in this dialog box in the step S51 and then clicks an OK button 70. Then, a lower hook's moving distance inputting program forming a lower hook's moving distance inputting means operates to display a dialog box to input a moving distance of the lower hook of the chain block, so as to prompt the user to input the moving distance of the lower hook of the chain block, as shown in FIG. 21. The user inputs the moving distance of the lower hook (maximum value) in this dialog box (S52) and then clicks an OK button 71. Then, a hand-operated power/ motor-driven power inputting program forming a hand-operated power /motor-driven power inputting means operates to display a dialog box to input the information on which is selected as power of the chain block, a hand-operated power or a motor-driven power (not shown). The user inputs either the hand-operated or the motor-driven in this dialog box in the step S53 and then clicks the OK button. Then, a traverse movement inputting grogram forming a traverse movement inputting means operates to display a dialog box to input need of transverse movement of the chain block, to prompt the user to input the need of the transverse movement of the chain block, as shown in FIG. 22. The user inputs the need of transverse movement of the chain block in this dialog box in the step S54 and then clicks an OK button 72.

The input values on the weight of load, the moving distance of the lower hook, the hand-operated power or motor-driven power, the need of traveling and transverse movement are stored in RAM 4, which in turn link to the chain block specifying program in the step S55.

After the link to the chain block specifying program, the process by the chain block specifying program is initiated. In the step (S1) of selecting the power system of the chain block, the type (hand-operated type or motor-driven type) of the chain block is automatically judged from the input value selected in the operating condition inputting program and the dialog box to select the model is displayed, first. Then, the user selects the desired model in the step S2. Thereafter, if he/she selects a specific model of the motor-driven type chain block (S3: YES), he/she makes judgment of the suitability of use condition in the steps S4-S5 and then selects either the one for outdoor use or the one for indoor use in the step S7. On the other hand, if he/she selects a specified model of the hand-operated chain block, then the process will directly go into the step S7 of prompting the user to select either the one for outdoor use or the one for indoor use. After that, the selections made by use of the model number selecting program in the steps S8-S10 are judged from the input values selected in the operating condition inputting program, to specify the model number of the chain block the user wants in the step S11. Then, the standard specification of the specified chain block is displayed on the standard specification display screen 30 in the step S12.

In the judgment of the model number, the input value of the weight of load is input as the rated load as it is. In the selection of the connection system, the hook type is selected when no transverse movement of the chain block is needed, and the trolley type is selected when the transverse movement of the same is needed. In the selection of the trolley type, the connection system selecting screen 29 is displayed, as shown in FIG. 7, so that the user can select the desired type one from the geared trolley type, the plain trolley type and the motor-driven type.

Then, the user confirms the standard specification displayed in the standard specification display screen 30. If the user wants to change the standard specification to the specification he/she wants (S13: YES), then he/she uses the specification changing program to selectively change the standard specification to any desired specification, so as to specify the chain block having the specification the user wants (S13: NO). Thereafter, the diagram display program operates to display the dialog box for the specification of the chain block in which the diagram and specification of the chain block of the specified model number and specification are displayed in the step S14.

This crane constructing program of the invention can permit the user to select the requested chain block of the model number in the form of being further related to the intended use conditions in a simple and efficient manner.

After the chain block having the specification the user wants is thus specified, the operating condition inputting program operates again, for judgment on the need of the transverse movement in the step S56. When no transverse movement is selected (S56: NO), the statutory warnings and the like mentioned later are displayed in the step S61 and then the process is ended.

When the user selects the need of the transverse movement (S56: YES), a dialog box to select a monorail crane (not shown) is displayed, to prompt the user to input the information on whether the crane moves only in the traversing direction, in the traversing direction as well as in the traveling direction, or in the traversing direction as well as in the swiveling direction. For the crane movable only in the traversing direction (S57: NO), the so-called monorail system (telpher) is selected and a dialog box to input span (not shown) to prompt the user to input the span of the monorail is displayed. When the user inputs the span in the step S62, the monorail having the specific span as was input is displayed in the step S63. Then, after the statutory warnings and the like, mentioned later, are displayed in the step S61, the process is ended.

On the other hand, when the user selects the need of movement in the traveling direction or in the swiveling direction (S57: YES), the specification of the crane system is selected. Then, a moving direction inputting program forming a moving direction inputting means operates to display a dialog box to input the moving direction, so as to prompt the user to select either the movement of the crane in the traveling direction or the movement of the crane in the swiveling direction, as shown in FIG. 23.

When the user clicks a selection button 73 and then an OK button 75 (S58: YES) in the dialog box to input the moving direction, that selection links to the overhead traveling crane specifying program in the step S59. On the other hand, when the user clicks a selection button 74 and then an OK button 75 (S58: NO), that selection links to the jib crane specifying program in the step S60.

After the link to the overhead traveling crane specifying program, the process by the overhead traveling crane specifying program mentioned above is initiated. The user selects either the suspension type or the top running type in the step S31, first, and then selects the type of saddle from the motor-driven type, the geared type and the plain type in the step S32. The selection between the hand-operated type and the motor-driven type is automatically judged from the input values selected in the operating condition inputting program in the step S53. For the hand-operated type, the dialog box to select the saddle (not shown) is displayed, in which the geared type and the plain type are only displayed. The user selects either the geared type saddle or the plain type saddle by clicking the related selection button and in turn clicking the OK button. On the other hand, for the motor-driven type, the motor-driven type is selected automatically and a dialog box to select specification of electric power (not shown) is displayed to prompt the user to select the specification of electric power. The user selects or inputs in this dialog box the frequency (50kHz or 60kHz), traveling speed (high speed, low speed and 2-speed) and others as are desired. When the user selects the top running type, the dialog box to select wheel type (not shown) is displayed before the next dialog box to select saddle or the dialog box to select specification of electric power is displayed. In the dialog box to select the wheel, the user selects a preferable wheel from the urethane wheel and the steel wheel.

After the saddle is specified, the dialog box to input beam conditions (not shown) is displayed to prompt the user to input the rated load and the span. When the user inputs the rated load and the span in this dialog box in the steps S33 and S34 and clicks the OK button and then selects the girder in the step S35, the dialog box for specification of crane is displayed, in which the diagram and specification of the overhead traveling crane of the specified model number and specification are displayed (S36).

After the link to the jib crane specifying program, the process by the jib crane specifying program mentioned above is initiated. When the user selects either the post type or the wall type in the step S41, first, and then selects the rated load and the model number in the steps S42, S43, the dialog box for specification of crane is displayed, in which the diagram and specification of the jib crane of the specified model number and specification are displayed (S44).

After the overhead traveling crane or the jib crane is specified in this manner, the statutory warnings and provisions on the crane system thus constructed, such as the need of training and qualification on the user's side, the submission of an installation report, etc., are displayed in the step S61, if required. Then, the process is ended.

This crane constructing program of the invention can permit the user to select the crane system equipped with the chain block of the requested model number in the form of being further related to the intended use conditions in a simple and efficient manner.

In the crane constructing program, the operating condition inputting program and the chain block specifying program may be activated, without activating the crane specifying program. In this case, in the step S56 in which the need of transverse movement is judged, the judgment is always made of needing no transverse movement (S56:NO).

While in the description above, CD-ROM 12 is used as the electronic catalog recording medium, it is not of restrictive. Any electronic catalog recording media, such as floppy disk, magnetic optical disk, IC card, software having the above-mentioned programs that can be directly downloaded to the user's computer through Internet, and hard disks that can record those programs, may be used, as long as they are recording media that can record the programs.

While in the description above, the process steps (order) in the chain block specifying program, the crane specifying program and the crane constructing program may be properly changed for the intended objects and applications. For example, the drive system selecting program may be activated after the model selecting program.

While the illustrative examples of the present invention are provided in the above description, such is for illustrative purpose only and it is not to be construed restrictively. Modification and variation of the present invention that will be obvious to those skilled in the art is to be covered in the following claims.

## Claims

1. A recording medium for an electronic catalog of chain blocks which can select a specific chain block a user requests and in which a model selecting means for selecting a model of the chain block; and a model number selecting means for selecting a model number of the chain block in respect of the model selected by the model selecting means are recorded.

2. A recording medium for an electronic catalog of chain blocks which can select a specific chain block a user requests and in which a power system selecting means for selecting a power system of the chain block; a model selecting means for selecting a model of the chain block from the power system selected by the power system selecting means; and a model number selecting means for selecting a model number of the chain block in respect of the model selected by the model selecting means are recorded.

3. The electronic catalog recording medium according to Claim 1, wherein a standard specification display means for displaying a standard specification of the chain block of the model number selected by the model number selecting means; a specification changing means for changing the standard specification; and a changed specification display means for displaying the changed standard specification are further recorded.

4. A recording medium for an electronic catalog of chain blocks which can select a specific chain block a user requests and in which a model number selecting means for selecting a model number of the chain block; a standard specification display means for displaying a standard specification of the chain block of the model number selected by the model number selecting means; a specification changing means for changing the standard specification; and a changed specification display means for displaying the changed standard specification are recorded.

5. The electronic catalog recording medium according to Claim 1, wherein the model number selecting means comprises a model number inputting means for directly inputting the model number and a model number determining means for inputting use conditions of the chain block to determine the model number.

6. The electronic catalog recording medium according to Claim 1, which comprises a diagram display means for displaying the chain block of the model number selected by the model number selecting means in a diagram.

7. A recording medium for an electronic catalog of cranes which can select a specific crane a user requests and in which a moving system selecting means for selecting a moving system of the crane and a model number selecting means for selecting a model number of the crane from the moving system selected by the moving system selecting means are recorded.

8. A recording medium for an electronic catalog of chain blocks which can select a specific chain block a user requests and in which an operating condition inputting means for inputting operating conditions of the chain block and a chain block specifying means for specifying the chain block are recorded,
wherein the operating condition inputting means comprises:
a rated load inputting means for inputting a rated load;
a lower hook moving distance inputting means for inputting a moving distance of a lower hook of the chain block;
a hand-operated power /motor-driven power inputting means for inputting an information on which is selected as power of the chain block, hand-operated power or motor-driven power;
a transverse movement inputting means for inputting information on need of transverse movement of the chain block; and
a storing means for storing values input by the lower hook moving distance inputting means, the hand-operated power/motor-driven power inputting means and the transverse movement inputting means,
wherein the chain block specifying means comprises:
a power system selecting means for selecting a power system of the chain block; and
a model number selecting means for selecting a model number of the chain block by inputting a rated load and a connection system; and
wherein the selection of the power system and the selection of the model number, which are made by the power system selecting means and the model number selecting means, respectively, of the chain block specifying means, are made on the basis of the input values stored in the storing means of the operating condition inputting means.

9. A recording medium for an electronic catalog of crane systems which can select a crane system having a specific chain block a user requests and in which an operating condition inputting means for inputting operating conditions of the crane system; a chain block specifying means for specifying the chain block; and a crane specifying means for specifying the crane are recorded,
wherein the operating condition inputting means comprises:
a rated load inputting means for inputting a rated load;
a lower hook moving distance inputting means for inputting a moving distance of a lower hook of the chain block;
a hand-operated power /motor-driven power inputting means for inputting an information on which is selected as power of the chain block, hand-operated power or motor-driven power;
a transverse movement inputting means for inputting information on need of transverse movement of the chain block;
a moving direction inputting means for inputting information on need for the crane to be moved in a traveling direction or a swiveling direction; and
a storing means for storing values input by the lower hook moving distance inputting means, the hand-operated power/motor-driven power inputting means, the transverse movement inputting means and the moving direction inputting means,
wherein the chain block specifying means comprises:
a power system selecting means for selecting a power system of the chain block; and
a model number selecting means for selecting a model number of the chain block by inputting a rated load and a connection system; and
wherein the crane specifying means comprises:
a moving system selecting means for selecting a moving system of the crane; and
a model number selecting means for selecting a model number of the crane from the moving system selected by the moving system selecting means; and
wherein the selection of the power system and the selection of the model number, which are made by the power system selecting means and the model number selecting means, respectively, of the chain block specifying means, and the selection of the moving system and the selection of the model number, which are made by the moving system selecting means and the model number selecting means, respectively, of the crane specifying means, are made on the basis of the input values stored in the storing means of the operating condition inputting means.

10. An electronic catalog device including a recording medium for an electronic catalog of chain blocks which can select a specific chain block a user requests and in which a model selecting means for selecting a model of the chain block; and a model number selecting means for selecting a model number of the chain block in respect of the model selected by the model selecting means are recorded.

11. An electronic catalog program for selecting a specific chain block a user requests, which program comprises a model selecting means for selecting a model of the chain block; and a model number selecting means for selecting a model number of the chain block in respect of the model selected by the model selecting means.

12. An electronic catalog program for selecting a specific crane a user requests, which program comprises a moving system selecting means for selecting a moving system of the crane; and a model number selecting means for selecting a model number of the crane from the moving system selected by the moving system selecting means.

13. An electronic catalog program for selecting a crane system including a specific chain block a user requests, which program comprises an operating condition inputting means for inputting operating conditions of the crane system, a chain block specifying means for specifying the chain block, and a crane specifying means for specifying the crane,
wherein the operating condition inputting means comprises:
a rated load inputting means for inputting a rated load;
a lower hook moving distance inputting means for inputting a moving distance of a lower hook of the chain block;
a hand-operated power /motor-driven power inputting means for inputting an information on which is selected as power of the chain block, hand-operated power or motor-driven power;
a transverse movement inputting means for inputting information on need of transverse movement of the chain block;
a moving direction inputting means for inputting information on need for the crane to be moved in a traveling direction or a swiveling direction; and
a storing means for storing values input by the lower hook moving distance inputting means, the hand-operated power/motor-driven power inputting means, the transverse movement inputting means, and the moving direction inputting means,
wherein the chain block specifying means comprises:
a power system selecting means for selecting a power system of the chain block; and
a model number selecting means for selecting a model number of the chain block by inputting a rated load and a connection system;
wherein the crane specifying means comprises:
a moving system selecting means for selecting a moving system of the crane; and
a model number selecting means for selecting a model number of the crane from the moving system selected by the moving system selecting means; and
wherein the selection of the power system and the selection of the model number, which are made by the power system selecting means and the model number selecting means, respectively, of the chain block specifying means, and the selection of the moving system and the selection of the model number, which are made by the moving system selecting means and the model number selecting means, respectively, of the crane specifying means, are made on the basis of the input values stored in the storing means of the operating condition inputting means.
